# EUROPEAN PATENT APPLICATION

(11) **EP 1 205 482 A2**
(43) Date of publication of application: **15.05.2002**
(21) Application number: 01811084.1
(22) Date of filing: 12.11.2001
(51) Int. Cl.: C07F 7/18, A61K 7/48

(54) **Alkyl trimethylsiloxybenzoat compounds and method of preparation**

(30) Priority: 13.11.2000 US 711863
(71) Applicant: Clariant Life Science Molecules (Florida) Inc., Gainesville, FL 32609 (US)
(72) Inventor: Legrow, Gary E., Newberry, Florida 32669 (US)
(74) Representative: D'haemer, Jan Constant

(57) **Abstract**

The invention provides high purity fluid alkyl triorgansiloxybenzoates of the general formula R'₃SiO-C₆H₄-COOR wherein R' is a monovalent aliphatic hydrocarbon substituent with 1 to about 6 carbons or a monovalent aromatic hydrocarbon substituent, -C₆H₄- is a disubstituted aromatic ring, and R is a monovalent aliphatic hydrocarbon substituent with from 1 to about 20 carbons, wherein the alkyl triorganosiloxybenzoates are produced by a novel process, and can be readily incorporated into cosmetic formulations containing organic components with heating and provide preservative properties in said cosmetic formulations comparable to those provided by their precursor solid alkyl hydroxybenzoates.

## Description

### FIELD OF THE INVENTION

The present invention relates to high purity alkyl trimethylsiloxybenzoate fluids and a method for their preparation. More specifically, the present invention relates to alkyl trimethylsiloxybenzoate fluids prepared from solid alkyl hydroxybenzoates, and the use of said alkyl trimethylsiloxybenzoate fluids in cosmetic formulations.

### BACKGROUND OF THE INVENTION

A wide range of alkyl p-hydroxybenzoate esters, such as 4-hydroxybenzoate esters, commonly referred to as parabens, are used in cosmetic formulations primarily for their preservative properties. Typically these esters are solids with the highest melting points being for those esters with the shortest alkyl groups, and with lower melting points for those esters with longer alkyl groups, as shown in Table I in degrees C.

**TABLE I**

| | | |
|---|---|---|
| Methyl 4-Hydroxybenzoate | HO-C₆H₄-COOMe | MP = 126-128 |
| Ethyl 4-Hydroxybenzoate | HO-C₆H₄-COOEt | MP = 116-118 |
| Propyl 4-Hydroxybenzoate | HO-C₆H₄-COOPr | MP = 95- 98 |
| Butyl 4-Hydroxybenzoate | HO-C₆H₄-COOBu | MP = 67- 69 |

Solid parabens are typically incorporated into cosmetic formulations by heating the formulations to elevated temperatures, above ambient, to either melt and/or hasten the rate of solubilization of the parabens. The higher the melting point of the paraben, the greater is the difficulty of incorporation of said paraben into a cosmetic formulation.

The present invention relates to a rapid catalytic process for preparing pure, clear, colorless, liquid, alkyl trimethylsiloxybenzoates from solid alkyl hydroxybenzoates by trimethylsilylation. Trimethylsilylation is the introduction of a trimethylsilyl group into an organic molecule by substitution of at least one active hydrogen atom. It is known in the art that active hydrogen containing organic molecules can be trimethylsilylated by certain classes of organosilicon compounds. For example, U.S. Pat. No. 5847179 discloses a trimethylsilylation reaction in which stearyl alcohol is trimethylsilylated by hexamethyldisilazane using an inorganic super acid catalyst, trifluoromethane sulfonic acid.

The present invention also relates to facile room temperature incorporation of liquid alkyl 4-trimethylsiloxy-benzoates into cosmetic formulations to provide active preservatives in the final formulations.

### SUMMARY OF THE INVENTION

The present invention provides high purity, clear, colorless liquid (at and below skin temperature) alkyl trimethylsiloxybenzoates of the general formula Me₃SiO-C₆H₄-COOR wherein Me is Methyl, the aromatic ring may be para substituted, and R is a straight or branched chain monovalent hydrocarbon substituent with from 1 to about 20 carbon atoms, preferably wherein the trimethylsiloxybenzoate fluid is substantially free of organic and inorganic compounds.

The present invention also provides a method for rapidly producing high purity, clear, colorless, liquid (at and below skin temperature) alkyl trimethylsiloxybenzoates, the process comprising the steps of (a) reacting a solid alkyl hydroxybenzoate with a trimethylsilyating agent, optionally in the presence of an effective amount of an organic superacid catalyst; optionally (b) neutralizing the mixture with an anhydrous base; (c) removing residual trimethylsilylating agent and ammonia from the product; (d) optionally filtering insoluble salts from the product; and (e) isolating the product by vacuum distillation.

### DETAILED DESCRIPTION OF THE PRESENT INVENTION

The present invention provides high purity, clear, colorless, liquid (at and below skin temperature) alkyl trimethylsiloxybenzoates of the general formula:

Me₃SiO-C₆H₄-COOR

wherein Me is Methyl, -C₆H₄- is a di-substituted aromatic ring, and preferably a para substituted ring and R is a straight or branched chain monovalent hydrocarbon substituent with from 1 to 20 or more carbon atoms, preferably wherein the alkyl trimethylsiloxybenzoate fluid is substantially free of organic and inorganic compounds, i.e. at least about 95% pure, more preferably at least about 99% pure. The preferred alkyl trimethylsiloxybenzoate is 4-alkyl trimethylsiloxybenzoate.

The present invention also provides a method for rapidly producing high purity, clear, colorless, liquid (at and below skin temperature) alkyl trimethylsiloxybenzoates, the process comprising the steps of (a) reacting a solid alkyl hydroxybenzoate with a trimethylsilyating agent optionally in the presence of an effective amount of an organic superacid catalyst; (b) optionally, neutralizing the mixture with an anhydrous base; (c) removing residual trimethylsilylating agent and ammonia from the product; (d) optionally filtering insoluble salts from the product; and (e) isolating the product by vacuum distillation.

Liquid high purity alkyl trimethylsiloxybenzoates provide the advantage of simple mixing with other organic ingredients at room temperature when producing formulated products containing active preservatives, without the need for heating associated with their alkyl hydroxybenzoate precursors.

Alkyl hydroxybenzoates are available commercially or may be produced by methods known to those skilled in the art. In a preferred embodiment, substantially pure to completely pure alkyl hydroxybenzoate is employed in the process of the present invention. The preferred alkylhydroxybenzoates for use in the practice of the present invention are methyl 4 hydroxybenzoate, ethyl 4-hydroxybenzoate, propyl 4- hyroxybenzoate, butyl 4-hydroxybenzoate and mixtures thereof.

In step (a), addition of the solid alkyl hydroxybenzoate to the trimethylsilylating agent must be carried out with care. An excessive rate of addition of the solid ester to the reactor can cause a build up of ammonia pressure, which could result in inability to control the reaction.

The trimethylsilylating agents useful in the practice of the present invention are known to those skilled in the art and are available commercially or may be produced by known methods. Hexamethyldisilazane is the most common trimethylsilylating agent commercially available; however, other organosilyl heteroatom reagents of the general formula:

R₃SiXSiR₃

wherein R may be an aliphatic or aromatic monovalent hydrocarbon substituent and X may be a heteroatom or substituted heteroatom including =NH, =NR, =NSiR₃, and =S may be used to trimethylsilylate solid alkyl hydroxybenzoates into liquid alkyl 4-triorganosiloxybenzoates in accordance with the present invention. Other exemplary trimethylsilylating agents may comprise hexamethyldisilthiane ((Me₃Si)₂S), bis(trimethyl) acetamide (MeCON(SiMe₃)₂), bis(trimethylsilyl) urea ((Me₃SiNH)₂C=O), (trimethylsilyldimethylamine (Me₃SiNMe₂), trimethylsilylmethane sulfonate ((Me₃SiOSO₂-Me) and mixtures thereof.

The trimethylsilylating agents used in the trimethylsilylating reaction should be present in an amount at least stoichiometric to the ester, preferably a slight excess of stoichiometric amount.

The trimethylsilylation reaction may also be catalyzed by an organic superacid, as are known to those skilled in the art. Typically, the superacids useful in the present invention are those having an organic group and a pKa at least about -14. A particularly preferred catalyst for use in the present invention is trifluoromethanesulfonic acid, commonly known as triflic acid. Other useful acids may comprise pentafluorophenylsulfonic acid, trifluroacetic acid, pentafluorophenylacetic acid, pentafluoropropionic acid and mixtures of the foregoing. Any effective amount of the superacid may be employed to sufficient to catalyze the trimethylsilylation reaction, generally trace amounts such as from about 20 to about 200 ppm by weight based on the amount of the ester.

The trimethylsilyation reaction is effected at temperatures ranging from about room temperature to about 100°C, preferably from about room temperature to about 60°C.

After completion of the trimethylsilyation reaction in cases where an organic superacid catalyst is employed the reaction mixture is preferably neutralized with an anhydrous base. Any commonly known anhydrous base may be used in this regard such as for example calcium oxide, magnesium oxide, calcium carbonate, calcimate and mixtures thereof. The amount of base added is effective to substantially neutralize the reaction mixture.

The alkyl trimethylsilyated benzoates are then recovered by removing residual trimethylsilyating agent and ammonia generated during the trimethylsilyate reaction. Ammonia can be removed by continuing to heat the reaction mixture after completion addition of the alkylbenzoate at a temperature about 50°C to about 70°C and venting. The trimethylsilylating agent can be effectively removed by vacuum distillation. Other insoluble salts present in the reaction mixture from the neutralization step can be removed by filtration.

Variations of the present invention will suggest themselves to those skilled in the art in light of the above-detailed description. For example, the formation or use of mixtures of two or more liquid alkyl trimethylsiloxybenzoates is an obvious extension of the present invention. All such obvious modifications are within the full intended scope of the appended claims.

### DESCRIPTION OF THE PREFERRED EMBODIMENTS

The following examples illustrate the present invention. They are not to be construed to limit the scope of the appended claims in any manner whatsoever.

### EXAMPLE 1

To a 500 ml, 3-necked flask, equipped with a powder addition funnel, magnetic stirrer, heating mantel, water condenser, and nitrogen overgas (bubbler) was added 97 g (0.60 mole) of hexamethyldisilazane. To the powder funnel was added 142 g (0.93 mole) of solid methyl hydroxybenzoate. The hexamethyldisilazane was stirred and heated to 72°C, and then the solid in the powder funnel was slowly added to the flask. As the solid dropped into the hexamethyldisilazane, it dissolved and ammonia was liberated (as seen and tested with wet pH paper at the bubbler). After the addition of the powder was complete, the mixture in the flask was heated for an additional hour at 50°C. Gas chromatography analysis of the mixture showed two peaks, hexamethyldisilazane and the product. A vacuum was applied to the mixture to remove the hexamethyldisilazane, and then the product was distilled at a pressure of 0.2 mm of Hg and a boiling point of 80°C to provide 200 g (96% yield) of methyl 4-trimethylsiloxybenzoate, with a refractive index at 25°C of 1.502. Mass Spectrometric analysis of this product showed the most abundant peak to be 209 (P-15). The parent peak of 224 was also present as a minor peak. The calculated molecular weight of the product is 224.

### EXAMPLE 2

To a 500 ml, 3-necked flask, equipped with a powder addition funnel, magnetic stirrer, heating mantel, water condenser, and nitrogen overgas (bubbler) was added 97 g (0.60 mole) of hexamethyldisilazane. To the powder funnel was added 166 g (1 mole) of solid ethyl 4-hydroxybenzoate. The hexamethyldisilazane was stirred and heated to 60°C, and then the solid in the powder funnel was slowly added to the flask. As the solid dropped into the hexamethyldisilazane, it dissolved and ammonia was liberated (as seen and tested with wet pH paper at the bubbler). After the addition of the powder was complete, the mixture in the flask was heated for an additional hour at 50°C Gas chromatography analysis of the mixture showed two peaks, hexamethyldisilazane and the product. A vacuum was applied to the mixture to remove the hexamethyldisilazane, and then the product was distilled at a pressure of 0.2 mm of Hg and a boiling point of 85°C to provide 235 g (99% yield) of ethyl 4-trimethylsiloxybenzoate, with a refractive index at 25°C of 1.495. Mass Spectrometric analysis of this product showed the most abundant peak to be 223 (P-15). The parent peak of 238 was also present as a minor peak. The calculated molecular weight of the product is 238.

### EXAMPLE 3

To a 500 ml, 3-necked flask, equipped with a powder addition funnel, magnetic stirrer, heating mantel, water condenser, and nitrogen overgas (bubbler) was added 97 g (0.60 mole) of hexamethyldisilazane. To the powder funnel was added 180 g (1 mole) of solid propyl 4-hydroxybenzoate. The hexamethyldisilazane was stirred and heated to 50°C, and then the solid in the powder funnel was slowly added to the flask. As the solid dropped into the hexamethyldisilazane, it dissolved and ammonia was liberated (as seen and tested with wet pH paper at the bubbler). After the addition of the powder was complete, the mixture in the flask was heated for an additional hour at 50°C. Gas chromatography analysis of the mixture showed two peaks, hexamethyldisilazane and the product. A vacuum was applied to the mixture to remove the hexamethyldisilazane, and then the product was distilled at a pressure of 0.2 mm of Hg and a boiling point of 80°C to provide 240 g (95% yield) of propyl 4-trimethylsiloxybenzoate, with a refractive index at 25°C of 1.492. Mass Spectrometric analysis of this product showed the most abundant peak to be 237 (P-15). The parent peak of 252 was also present as a minor peak. The calculated molecular weight of the product is 252.

### EXAMPLE 4

To a 500 ml, 3-necked flask, equipped with a powder addition funnel, magnetic stirrer, heating mantel, water condenser, and nitrogen overgas (bubbler) was added 97 g (0.60 mole) of hexamethyldisilazane. To the powder funnel was added 194 g (1 mole) of solid butyl 4-hydroxybenzoate. The hexamethyldisilazane was stirred and heated to 50°C, and then the solid in the powder funnel was slowly added to the flask. As the solid dropped into the hexamethyldisilazane, it dissolved and ammonia was liberated (as seen and tested with wet pH paper at the bubbler). After the addition of the powder was complete, the mixture in the flask was heated for an additional hour at 50°C. Gas chromatography analysis of the mixture showed two peaks, hexamethyldisilazane and the product. A vacuum was applied to the mixture to remove the hexamethyldisilazane, and then the product was distilled at a pressure of 1.0 mm of Hg and a boiling point of 105°C to provide 250 g (94% yield) of butyl 4-trimethylsiloxybenzoate, with a refractive index at 25°C of 1.491. Mass Spectrometric analysis of this product showed the most abundant peak to be 251 (P-15). The parent peak of 266 was also present as a minor peak. The calculated molecular weight of the product is 266.

### EXAMPLE 5

Example 4 was repeated, except that Triflic acid was used to catalyze the trimethylsilylation as follows. To a 500 ml, 3-necked flask, equipped with a powder addition funnel, magnetic stirrer, heating mantel, water condenser, and nitrogen overgas (bubbler) was added 97 g (0.60 mole) of hexamethyldisilazane. To the powder funnel was added 194 g (1 mole) of solid butyl 4-hydroxybenzoate. To the hexamethyldisilazane was added 1 drop of Triflic acid. The mixture was then stirred and heated to 50°C, and then the solid in the powder funnel was slowly added to the flask. As the solid dropped into the hexamethyldisilazane, it dissolved and ammonia was rapidly liberated (as seen and tested with wet pH paper at the bubbler). After the addition of the powder was complete, the mixture in the flask was heated for an additional hour at 50°C. One gram of anhydrous calcium oxide was then added to the mixture. Gas chromatography analysis of the mixture showed two peaks, hexamethyldisilazane and the product. A vacuum was applied to the mixture to remove the hexamethyldisilazane. The mixture was then filtered under nitrogen, and then the product was distilled at a pressure of 1.0 mm of Hg and a boiling point of 105°C to provide 245 g (92% yield) of butyl 4-trimethylsiloxybenzoatewith a refractive index at 25°C of 1.491. The Gas chromatography retention time of this product was identical to the gas chromatography retention time of the product of example 4.

### EXAMPLE 6

Aqueous solutions of the products from examples 3 and 5 above were prepared as follows. A 0.715% solution of propyl 4-trimethylsiloxybenzoate was prepared in a 50/50 w/w medium of 1,2-dimethoxyethane (DME)and sterilized water. In this medium, propyl 4-trimethylsiloxybenzoate is hydrolytically unstable. Accordingly this DME/water solution (I) will contain 0.500% propyl 4-hydroxybenzoate and 0.180% trimethylsilanol and/or it's condensate hexamethyldisiloxane. In a similar manner a 0.685 % solution of butyl 4-trimethylsiloxybenzoate was prepared in a 50/50 w/w medium of 1,2-dimethoxyethane (DME)and sterilized water. In this medium, butyl 4-trimethylsiloxybenzoate is hydrolytically unstable. Accordingly this DME/water solution (II) will contain 0.500% butyl 4-hydroxybenzoate and 0.170% trimethylsilanol and/or it's condensate hexamethyldisiloxane. The above two aqueous solutions were employed in Zone Inhibition Testing against three bacteria: Pseudomonas aeruginosa, Escherichia coli and Staphylococcus aureus.

A sterilized metal penny cylinder was put in the center of a Petri dish. Twenty grams of sterilized Tryptic Soy Agar (TSA) was poured into the Petri dish. The TSA was cooled and the penny cylinder was removed from the Agar plate. One tenth of one milliliter (0.1 ml) of bacteria suspension was streaked on the surface of the Agar in the Petri dish. The plates were incubated for 15 minutes at 37°C. In the hole of the TSA was put 0.4 ml of sample and the Petri dish was incubated at 37°C. The Agar plates were checked for Zone of Inhibition after 24, 48, and 72 hours.

Solution (II) showed a Zone of inhibition against all three types of bacteria, while solution (I) showed a Zone of Inhibition against E. coli and S. aureus, but not against P. aeruginosa.

All four of the methyl-, ethyl-, propyl-, and butyl- 4-hydroxybenzoates are well known in the art to be effective preservatives. Example 5 was shows that the alkyl 4-trimethylsiloxybenzoates hydrolyze in aqueous media to form the corresponding alkyl 4-hydroxybenzoates which exhibit preservative characteristics.

## Claims

1. A process for the production of an alkyl triorganosiloxybenzoate fluid of the general formula:
R'₃SiO-C₆H₄-COOR
wherein each R' is independently a monovalent alkyl hydrocarbon substituent with from 1 to about 20 carbons or an aryl hydrocarbon substituent with 6 carbons, -C₆H₄- is a di-substituted aromatic ring, and R is a monovalent aliphatic hydrocarbon substituent with from 1 to about 20 carbons, said process comprising the steps of:
(a) reacting a solid alkyl hydroxybenzoate with a trimethylsilyating agent;
(b) removing residual trimethylsilylating agent and ammonia from the product;
(c) recovering the product alkyl triorganosiloxybenzoate fluid.

2. The process of Claim 1 wherein said alkyl hydroxy-benzoate is methyl 4-hydroxybenzoate, ethyl 4-hydroxybenzoate, propyl 4-hydroxybenzoate, or butyl 4-hydroxy-benzoate.

3. The process of Claim 1 or 2 wherein said trimethylsilylating agent is a compound comprising an organosilyl heteroatom of the general formula R₃SiXSiR₃ wherein R is an aliphatic or aromatic monovalent hydrocarbon substituent and X is a heteroatom or substituted heteroatom.

4. The process of Claim 3 wherein said trimethylsilylating agent is hexamethyldisilazane.

5. The process of any of Claims 1 to 4 wherein the trimethylsilylation step (a) is performed at between about room temperature and about 100°C.

6. The process of Claim 5 wherein said trimethylsilylation reaction temperature ranges from about 60°C to about 80°C.

7. A process for the production of an alkyl triorganosiloxybenzoate fluid of the general formula:
R'SiO-C₆H₄-COOR
wherein each R' is independently a monovalent alkyl hydrocarbon substituent with from 1 to about 20 carbons or an aryl hydrocarbon substituent with 6 carbons, -C₆H₄- is a di-substituted aromatic ring, and R is a monovalent aliphatic hydrocarbon substituent with from 1 to about 20 carbons, said process comprises the step of:
(a) reacting a solid alkyl hydroxybenzoate with a trimethylsilylating agent in the presence of an organic superacid catalyst;
(b) neutralizing the reaction mixture with an anhydrous base;
(c) removing residual trimethylsilylating agent and ammonia from the neutralized reaction mixture;
(d) filtering insoluble salt from the resultant mixture; and
(e) recovering said triorganosiloxybenzoate fluid product from said filtering step.

8. The process of Claim 7 wherein said catalyst is selected from the group consisting of trimethanesulfonic acid, pentafluorophenylsulfonic acid, trifluroacetic acid, pentafluoroacetic acid, pentafluoropropionic acid and mixtures thereof.

9. The process of Claim 8 wherein said catalyst is trimethanesulfonic acid.

10. The process of any of Claims 7 to 9 wherein said alkyl hydroxybenzoate is selected from the group consisting of methyl 4-hydroxybenzoate, ethyl 4-hydroxybenzoate, propyl 4-hydroxybenzoate, butyl 4-hydroxybenzoate and mixtures thereof.

11. The process of any of Claims 7 to 10 wherein said trimethylsilylating agent is a compound comprising an organosilyl heteroatom and having the general formula R₃SiXSiR₃ wherein R is an aliphatic or aromatic monovalent hydrocarbon substituent and X is a heteroatom or substituted heteroatom.

12. The process of Claim 11 wherein the trimethylsilylating agent is hexamethyldisilazane.

13. The process of any of Claims 7 to 12 wherein said anhydrous base is selected from the group consisting of calcium oxide, magnesium oxide, calcium carbonate and magnesium carbonate.

14. An alkyl 4-triorganosiloxybenzoate fluid of the general formula:
R'₃SiO-C₆H₄-COOR
wherein each R' is independently a monovalent alkyl hydrocarbon substituent with from 1 to about 20 carbons or an aryl hydrocarbon substituent with 6 carbons, -C₆H₄- is a di-substituted aromatic ring, and R is a monovalent aliphatic hydrocarbon substituent with from 1 to about 20 carbons.

15. An alkyl 4-triorganosiloxybenzoate fluid as defined in Claim 14 wherein each R' is independently a monovalent aliphatic hydrocarbon substituent with from 1 to about 6 carbons.

16. An alkyl 4-triorganosiloxybenzoate fluid as defined in Claim 14 or 15 wherein R is a monovalent aliphatic hydrocarbon substituent with from 1 to about 4 carbons and each R' is monovalent aliphatic hydrocarbon substituent with 1 carbon.

17. An alkyl 4-triorganosiloxybenzoate fluid as defined in any of Claims 14 to 16, wherein each R' is methyl and R is methyl, ethyl, propyl or butyl.

18. An alkyl 4-triorganosiloxybenzoate fluid as defined in any of Claims 14 to 17 possessing the capability of being incorporated into cosmetic formulations at room temperature.

19. An alkyl 4-triorganosiloxybenzoate fluid as defined in any of Claims 14 to 18 possessing the capability of delivering an alkyl hydroxybenzoate in an aqueous system with preservative properties against bacteria.

20. A cosmetic formulation comprising an alkyl 4-triorganosiloxybenzoate fluid as defined in any of Claim 14 to 19 or comprising an alkyl 4-triorganosiloxybenzoate fluid produced by the process as defined in any of Claims 1 to 6 or comprising an alkyl 4-triorganosiloxybenzoate fluid produced by the process as defined in any of Claims 7 to 13.
